(19) Europäisches Patentamt
European Patent Office
Office européen des brevets

(11) EP 4 056 607 A1

(12) # EUROPÄISCHE PATENTANMELDUNG

(43) Veröffentlichungstag:
**14.09.2022 Patentblatt 2022/37**

(21) Anmeldenummer: **21162320.2**

(22) Anmeldetag: **12.03.2021**

(51) Internationale Patentklassifikation (IPC):
***C08F 283/06*** *(2006.01)* ***C08F 290/06*** *(2006.01)*
***C09J 151/08*** *(2006.01)* ***C04B 26/06*** *(2006.01)*
***C04B 40/06*** *(2006.01)*

(52) Gemeinsame Patentklassifikation (CPC):
(C-Sets verfügbar)
**C09J 151/08; C04B 26/06; C04B 26/14;**
**C04B 26/16; C04B 28/04; C04B 28/06;**
**C04B 40/0666; C08F 283/06; C08F 290/068;**
C04B 2111/00715 (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
- **Bürgel, Thomas**
  **86899 Landsberg (DE)**
- **Bornschlegl, Alexander**
  **81245 München (DE)**

(74) Vertreter: **Hilti Aktiengesellschaft**
**Corporate Intellectual Property**
**Feldkircherstrasse 100**
**Postfach 333**
**9494 Schaan (LI)**

(54) **REAKTIVVERDÜNNERMISCHUNG FÜR DIE CHEMISCHE BEFESTIGUNG**

(57) Es werden Reaktivharzmischungen, welche eine radikalisch härtbare Verbindung und eine Mischung aus zwei Reaktivverdünnern ausgewählt aus Alkylenglykoldi(meth)acrylaten beinhalten, sowie daraus erhaltene Reaktivharzkomponenten und Mehrkomponentige Reaktivharzsysteme beschrieben. Des Weiteren wird die Verwendung einer Mischung aus zwei Reaktivverdünnern ausgewählt aus Alkylenglykoldi(meth)acrylaten zur Erhöhung der Leistungsfähigkeit einer Befestigungsanordnung mit einem diese Mischung enthaltenden Reaktivharzmörtel und einem Befestigungsmittel bei erhöhten Temperaturen beschrieben.

EP 4 056 607 A1

(52) Gemeinsame Patentklassifikation (CPC): (Forts.)

C-Sets
**C04B 26/06, C04B 14/06, C04B 22/068,
C04B 24/2641, C04B 24/2647, C04B 40/065;
C04B 28/04, C04B 14/06, C04B 22/068,
C04B 24/2641, C04B 24/2647, C04B 24/282,
C04B 40/065;
C04B 28/06, C04B 14/06, C04B 22/068,
C04B 24/2641, C04B 24/2641, C04B 24/2647,
C04B 40/065;
C04B 28/06, C04B 14/06, C04B 22/068,
C04B 24/2641, C04B 24/2647, C04B 24/281,
C04B 40/065;
C08F 283/06, C08F 222/102;
C08F 290/068, C08F 222/102;
C08F 290/068, C08F 222/103**

## Beschreibung

Die vorliegende Erfindung betrifft Reaktivharzmischungen, welche eine radikalisch härtbare Verbindung und eine Mischung aus zwei Reaktivverdünnern ausgewählt aus Alkylenglykoldi(meth)acrylaten beinhalten, sowie daraus erhaltene Reaktivharzkomponenten und Reaktivharz-Systeme. Des Weiteren betrifft die Erfindung die Verwendung einer Mischung aus zwei Reaktivverdünnern ausgewählt aus Alkylenglykoldi(meth)acrylaten zur Erhöhung der Leistungsfähigkeit einer Befestigungsanordnung mit einem diese Mischung enthaltenden Reaktivharzmörtel und einem Befestigungsmittel bei erhöhten Temperaturen.

## Hintergrund

Im Laufe der letzten Jahre wurde das Thema ökologisches Bauen nach dem Green Building Standard interessanter und wichtiger. Immer mehr Staaten schreiben die Verwendung von umweltfreundlichen Produkten beim Bauen vor. Daneben gilt es den Verpackungsmüll zu reduzieren und die Kohlenstoffdioxidbilanz zu verbessern.

Auch im Bereich der chemischen Dübel gibt es Vorschriften, welche die Verwendung von kennzeichnungsfreien und umweltfreundlichen Mörteln in bestimmten Bereichen vorschreiben.

Ein solcher Mörtel ist in der DE 20 2010 051 818 B3 beschrieben. Dieser Mörtel weist eine geringere Konzentration an Peroxid auf als sonst üblich.

Dieser hat jedoch den Nachteil, dass einige der als besonders geeignet beschrieben Reaktivverdünner mittlerweile kennzeichnungspflichtig geworden sind, was dazu führt, dass trotz einer Reduzierung des Anteils an Peroxid unter den gegeben Schwellenwert die Produkte kennzeichnungspflichtig werden können, je nach verwendetem Reaktivverdünner.

Gerade im Bereich kennzeichnungsfreier oder kennzeichnungsarmer chemischen Dübel ist die Auswahl an geeigneten Rohstoffe sehr begrenzt. Insbesondere höhermolekulare Oligoethylenglykoldi(meth)acrylate können verwendet werden, wie beispielsweise in der EP 3 164 432 A1 beschrieben. Diese beschreibt die Verwendung insbesondere von Oligoalkylenglykoldi(meth)acrylaten mit 4,2 bis 7 Wiederholeinheiten in der Oligoalkylenstruktur als besonders geeignet, vor allem hinsichtlich der Robustheit bei der Vermischung der Komponenten.

Demgegenüber hat sich gezeigt, dass durch die Verwendung langkettiger Reaktivverdünner, wie in der EP 3 164 432 A1 beschrieben, die Leistungsfähigkeit der chemischen Mörtel bei erhöhter Temperatur, also bei erhöhten Temperaturen im eingebauten Zustand, wie etwa bei +80°C, nachteilig ist, da die Leistungsfähig der chemischen Mörtel bei diesen Temperaturen abfällt.

In der Folge müssen die zulässigen Lasten für die Verwendung bei erhöhten Temperaturen reduziert werden. Übliche Temperaturklassen in der Zulassung von chemischen Dübeln sind 50°C (max. Langzeittemperatur) 80°C (max. Kurzzeittemperatur), 72/120°C, 120/160°C usw..

Es besteht daher Bedarf, eine verbesserte Leistungsfähigkeit einer chemischen Befestigungsanordnung bei erhöhten Temperaturen, d.h. ab einer Temperatur von etwa +80°C, zu ermöglichen, ohne die Kennzeichnungsfreiheit und die Robustheit bei der Durchmischung der Mörtelkomponenten zu verlieren.

## Beschreibung der Erfindung

Überraschenderweise zeigte sich, dass durch Zumischung von niedermolekularen Mono- und Oligoalkylenglykoldi(meth)acrylaten mit bis zu drei Alkylenglykol-Wiederholeinheiten zu Polyalkylenglykoldi(meth)acrylaten mit vier oder mehr Alkylenglykol-Wiederholeinheiten, die Leistungsfähigkeit einer Befestigungsanordnung unter diesen Bedingungen verbessert werden kann, wenn die durchschnittliche Zahl der Wiederholeinheiten gemittelt über die Mischung kleiner als 4 ist.

Durch die Anwendung dieser Erfindung ist es möglich, Reaktivharzmörtel mit hoher Leistungsfähigkeit bei Temperaturen ab +80°C bereitzustellen.

Ein erster Gegenstand der Erfindung ist eine Reaktivharzmischung mit wenigstens einer radikalisch härtbaren Verbindung als Reaktivharz und mit einer Reaktivverdünnermischung, die dadurch gekennzeichnet ist, dass die Reaktivverdünnermischung wenigstens einen ersten Reaktivverdünner (RV1), der unter Monoalkylenglykoldi(meth)acrylaten und Oligoalkylenglykoldi(meth)acrylaten mit zwei oder drei Alkylenglykol-Wiederholeinheiten ausgewählt ist, und wenigstens einen zweiten Reaktivverdünner (RV2), der unter Polyalkylenglykoldi(meth)acrylaten mit vier oder mehr Alkylenglykol-Wiederholeinheiten ausgewählt ist, wobei die gewichtsmittlere Zahl der Alkylenglykol-Wiederholeinheiten $n_{AV}$ der Mischung aus dem wenigstens einen ersten Reaktivverdünner (RV1) und dem wenigstens einen zweiten Reaktivverdünner (RV2) kleiner als 4 ($n_{AV} < 4$) ist und wobei die gewichtsmittlere Zahl der Alkylenglykol-Wiederholeinheiten $n_{AV}$ nach der Formel

$$n_{AV} = \Sigma(n_i{*}w_i) / \Sigma(w_i)$$

berechnet wird, in der

i die in der Reaktivverdünnermischung enthaltenen Reaktivverdünner (RVi) sind, beispielsweise RV1 und RV2 für eine Mischung aus zwei Reaktivverdünnern,
$n_i$ die jeweilige Anzahl der Wiederholeinheiten in dem Reaktivverdünner i, z.B. $n_1$ für RV1 und $n_2$ für RV2, und
$w_i$ die Masse in Gew.-% des jeweiligen Reaktivverdünners i, bezogen auf die Reaktivverdünnermischung, ist.

Ein zweiter Gegenstand der Erfindung ist eine Reaktivharzkomponente, die eine erfindungsgemäße Reaktivharzmischung enthält.

Ein dritter Gegenstand der Erfindung ist ein Reaktivharz-System mit einer erfindungsgemäßen Reaktivharzkomponente (A) und einer Härterkomponente (B), die einen Initiator (wie etwa ein Peroxid) für die Härtung des Reaktivharzes enthält. Die Komponenten (A) und (B) sind bis zur Verwendung des Reaktivharz-Systems räumlich getrennt voneinander verpackt, damit erst eine Reaktion stattfindet, wenn die beiden Komponenten miteinander in Kontakt gebracht werden.

Ein vierter, fünfter und sechster Gegenstand der Erfindung ist die Verwendung einer erfindungsgemäßen Reaktivharzmischung, einer erfindungsgemäßen Reaktivharzkomponente und eines erfindungsgemäßen Reaktivharz-Systems zur chemischen Befestigung von Verankerungsmitteln in Bohrlöchern oder zum baulichen Kleben.

Ein siebter Gegenstand der Erfindung ist die Verwendung einer Mischung aus einem ersten Reaktivverdünner und einem zweiten Reaktivverdünner, wie in dem ersten Gegenstand der Erfindung beschrieben, zur Verbesserung der Hochtemperatureigenschaften eines ausgehärteten Reaktivharz-Systems für die chemische Befestigung.

Im Sinne der Erfindung bedeuten die verwendeten Begriffe:

- *"Oligoalkylenglykol-"* als Gruppe, bedeutet, dass diese zwei, drei oder vier Alkylengylkol-Einheiten enthalten kann und damit eine Dialkylenglykol-, eine Triethylenglykol- oder Tetraethylen-Einheit; hierunter ist auch eine Mischung von Verbindungen mit niederen (Mono-, Di-, Tri- und Tetra-) und mittelmolekularen (etwa 200 g/mol, 400 g/mol oder 600 g/mol) Alkylenglykol-Einheiten zu verstehen, wobei die Mischung eine mittlere Länge n der Wiederholeinheit von kleiner 4 ($n > 4$) aufweist;

- *"Polyalkylenglykol-"* als Gruppe bedeutet, dass diese mehr als vier Alkylenglykol-Einheiten enthält und sich damit von der Oligoalkylenglykol-Gruppe unterscheidet; diese sind häufig Mischung von Verbindungen mit unterschiedlichen Alkylenglykolketten;

- *"-propylen-"* eine Gruppe, die sowohl die 1,2-propylen- als auch die 1,3-propylen-Gruppe bedeuten kann, wobei die 1,2-propylen-Gruppe bevorzugt ist;

- *"Reaktivharzmischung"* eine Mischung aus radikalisch härtbarer Verbindung, einem oder mehreren Inhibitoren, einer Reaktivverdünnermischung und gegebenenfalls weiteren Additiven; die Reaktivharzmischung ist typischerweise flüssig oder viskos und kann zu einer Reaktivharzkomponente weiterverarbeitet werden;

- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet; die jeweilige Bedeutung des Begriffes erschließt sich aus dem Kontext);

- *"Initiator"* einen Stoff, der (üblicherweise in Kombination mit einem Beschleuniger) reaktionsinitiierende Radikale bildet;

- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;

- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung)

zum überwiegenden Teil Bestandteil der gehärteten Masse (z.B. des Mörtels) werden; Reaktivverdünner werden auch co-polymerisierbares Monomer genannt;

- *"Reaktivharzkomponente"* eine flüssige oder viskose Mischung aus Reaktivharzmischung und Füllstoffen und optional weiteren Komponenten, z.B. Füllstoffen, Additiven; typischerweise ist die Reaktivharzkomponente eine der beiden Komponenten eines Zweikomponenten-Reaktivharz-Systems zur chemischen Befestigung;

- *"Härterkomponente"* eine Zusammensetzung, die einen Initiator für die Polymerisation einer radikalisch härtbaren Verbindung enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;

- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;

- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;

- *"(Meth)acryl.../...(meth)acryl...",* dass sowohl die "Methacryl.../...methacryl..."- als auch die "Acryl.../...acryl... "-Verbindungen gemeint sein sollen; bevorzugt sind in der vorliegenden Erfindung "Methacryl... /... methacryl... "-Verbindungen gemeint;

- *"Epoxy(meth)acrylat"* ein Epoxidharz, das Acrylat- oder Methacrylatgruppen aufweist und im wesentlichen Epoxygruppen-frei ist;

- *"Alkyl"* einen gesättigten Kohlenwasserstoffrest, der verzweigt oder unverzweigt sein kann; bevorzugt ein $C_1$-$C_7$-Alkyl, besonders bevorzugt ein $C_1$-$C_4$-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;

- *"Hydroxyalkyl"* ein Alkyl, das mindestens eine Hydroxylgruppe als Substituenten trägt;

- *"Alkenyl"* einen ungesättigten Kohlenwasserstoffrest mit mindestens einer Doppelbindung, der verzweigt oder unverzweigt sein kann; bevorzugt ein $C_2$-$C_{20}$-Alkenyl, besonders bevorzugt ein $C_2$-$C_6$-Alkenyl, also ein Alkenyl ausgewählt aus der Gruppe bestehend aus Ethenyl, Propenyl, Butenyl, Pentenyl und Hexenyl; Ethenyl, Propenyl und Butenyl sind besonders bevorzugt, und ganz besonders bevorzugt ist Ethenyl;

- *"Alkinyl"* einen ungesättigten Kohlenwasserstoffrest mit mindestens einer Dreifachbindung, der verzweigt oder unverzweigt sein kann; bevorzugt ein $C_2$-$C_{20}$-Alkinyl, besonders bevorzugt ein $C_2$-$C_6$-Alkinyl, also ein Alkinyl ausgewählt aus der Gruppe bestehend aus Ethinyl, Propinyl, Butinyl, Pentinyl und Hexinyl; Ethinyl, Propinyl und Butinyl sind besonders bevorzugt, und ganz besonders bevorzugt ist Ethinyl;

- *"kalthärtend",* dass eine Reaktivharzmischung oder ein Reaktivharz-System bei Raumtemperatur vollständig aushärten kann;

- *"ein", "eine", "einer"* als Artikel vor einer chemischen Verbindungsklasse, z.B. vor dem Wort "Epoxymethacrylat", dass eine oder mehrere unter diese chemische Verbindungsklasse fallende Verbindungen, z.B. verschiedene Epoxymethacrylate, gemeint sein können. In einer bevorzugten Ausführungsform ist mit diesem Artikel nur eine einzelne Verbindung gemeint;

- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;

- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus";*

- *"etwa"* oder *"circa"* oder *"ca."* vor einem Zahlenwert einen Bereich von ± 5% dieses Wertes, bevorzugt ± 2% dieses Wertes, bevorzugter ± 1% dieses Wertes, besonders bevorzugt ± 0% dieses Wertes (also genau diesen Wert).

Alle in diesem Text genannten Normen (z.B. DIN-Normen) wurden in der zum Anmeldetag dieser Anmeldung aktuellen Ausgabe verwendet.

*Reaktivverdünnermischung*

Gemäß der vorliegenden Erfindung enthält die Reaktivharzmischung eine Reaktivverdünnermischung aus wenigstens einem ersten Reaktivverdünner (RV1), der unter Monoalkylenglykoldi(meth)acrylaten und Oligoalkylenglykoldi(meth)acrylaten mit zwei oder drei Alkylenglykol-Wiederholeinheiten ausgewählt ist, und wenigstens einem zweiten Reaktivverdünner (RV2), der unter Polyalkylenglykoldi(meth)acrylaten mit vier oder mehr Alkylenglykol-Wiederholeinheiten ausgewählt ist, wobei die gewichtsmittlere Zahl der Alkylenglykol-Wiederholeinheiten $n_{AV}$ der Mischung aus dem wenigstens einen ersten Reaktivverdünner (RV1) und dem wenigstens einen zweiten Reaktivverdünner (RV2) kleiner als 4 ($n_{AV}$ < 4) ist und wobei die gewichtsmittlere Zahl der Alkylenglykol-Wiederholeinheiten $n_{AV}$ nach der Formel

$$n_{AV} = \Sigma(n_i{*}w_i) / \Sigma(w_i)$$

berechnet wird, in der

i die in der Reaktivverdünnermischung enthaltenen Reaktivverdünner (RVi) sind, beispielsweise RV1 und RV2 für eine Mischung aus zwei Reaktivverdünnern,
$n_i$ die jeweilige Anzahl der Wiederholeinheiten in dem Reaktivverdünner i, z.B. $n_1$ für RV1 und $n_2$ für RV2, und
$w_i$ die Masse in Gew.-% des jeweiligen Reaktivverdünners i, bezogen auf die Reaktivverdünnermischung, ist.

Bevorzugt handelt es sich bei dem Reaktivverdünner (RV1) um einen solchen der Formel (I)

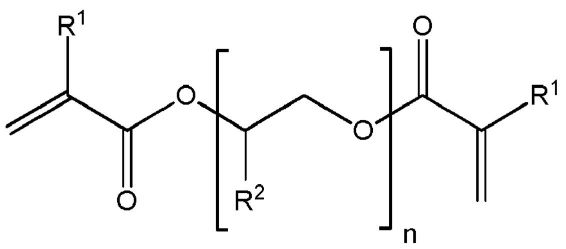
(I),

worin

die Reste $R^1$ jeweils unabhängig voneinander für H oder $CH_3$ stehen,
der Rest $R^2$ für H oder $C_1$-$C_7$-Alkyl steht, insbesondere für Methyl, und
n für durchschnittlich 1 bis 3, insbesondere 1, 2 oder 3 steht.

Besonders bevorzugt ist der erste Reaktivverdünner (RV1) aus der Gruppe bestehend aus Ethylenglykoldi(meth)acrylat, Propylenglykoldi(meth)acrylat, Diethylenglykoldi(meth)acrylat, Dipropylenglykoldi(meth)acrylat Triethylenglykoldi(meth)acrylat und Tripropylenglykoldi(meth)acrylat ausgewählt, worunter Ethylenglykoldi(meth)acrylat, Diethylenglykoldi(meth)acrylat, Triethylenglykoldi(meth)acrylat sowie gemischte Ethylen- /Propylenglykoldi(meth)acrylate wie Ethylenglykol-dipropylenglykol-di(meth)acrylat besonders bevorzugt ist.
Bevorzugt handelt es sich bei dem zweiten Reaktivverdünner (RV2) um einen solchen der Formel (II)

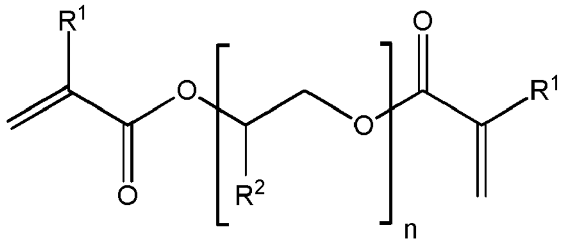

(II),

worin

die Reste $R^1$ jeweils unabhängig voneinander für H oder $CH_3$ stehen,
der Rest $R^2$ für H oder $C_1$-$C_7$-Alkyl steht, insbesondere für H oder Methyl, und
n für durchschnittlich 4 oder größer, insbesondere 4 bis 10, besonders bevorzugt 4 bis 8, ganz besonders bevorzugt 4,2 bis 7 steht.

Beispiele für entsprechende Verbindungen sind insbesondere Polyethylenglykol200-Di(meth)acrylat (PEG200DMA) (Mittelwert n = 4,0 bis 4,5) (am stärksten bevorzugt), Polyethylenglykol400-Di(meth)acrylat (PEG400DMA) (Mittelwert n = 9), ferner Polyethylenglykol600-Di(meth)acrylat (PEG600DMA) (Mittelwert n = 13).

Tetraethylenglykoldi(meth)acrylat, Tetrapropylenglykoldi(meth)acrylat und dergleichen sowie gemischte Ethylenglykol-co-propylenglykol-di(meth)acrylate, wie Diethylenglykol-tripropylenglykoldi(meth)acrylat, und höhere Alkylenglykoldi(meth)acrylate sowie deren Mischungen, insbesondere Polyethylenglykoldi(meth)acrylate oder Polypropylenglykoldi(meth)acrylate mittlerer Molmassen im Bereich von 100 bis 800 g/mol, also z.B. PEG200Di(meth)acrylat, PPG350Di(meth)acrylat, wobei die angegebene Zahl für die (ggf. stark gerundete) Molmasse des Polyethylen- oder/und Polypropylenglykol-Grundkörpers steht.

Ferner ist es denkbar, dass neben den genannten Di(meth)acrylaten auch höherfunktionelle (Meth)acrylate, also solche Verbindungen mit mindestens zwei (Meth)acrylate-Gruppen, verwendet werden können. Hierbei können Glyzerin, Trimethylolpropan, Pentaerythrit und dergleichen genannt werden, die gegebenenfalls mit Ethylenoxid und/oder Propylenoxid unter Kettenverlängerung zu höherfunktionellen (Meth)acrylaten umgesetzt wurden.

In einer Ausführungsform der Erfindung kann die Reaktivverdünnermischung mehr als zwei Reaktivverdünner umfassen, insbesondere drei oder vier.

Erfindungsgemäß ist die gewichtsmittlere Zahl der Alkylenglykol-Wiederholeinheiten $n_{AV}$ der Mischung kleiner als 4 ($n_{AV} < 4$). Bevorzugt liegt der Werte für $n_{av}$ zwischen 2 und 3,8 (unter Zugrundelegung eines Wertes n für PEG200DMA von 4), weiter bevorzugt zwischen 2,5 und 3,8 und stärker bevorzugt zwischen 3 und 3,8.

Hieraus ergibt sich nach obiger Formel ein bevorzugter Bereich für $\Sigma(w_i)$ unter Berücksichtigung aller Alkylenglykoldi(meth)acrylat-basierten Reaktivverdünner von 5 bis 30, weiter bevorzugt 8 bis 25 und besonders bevorzugt von 8 bis 20, jeweils bezogen auf die Harzkomponente; oder bevorzugt von 12 bis 75, weiter bevorzugt von 20 bis 63 und besonders bevorzugt von 20 bis 50, jeweils bezogen auf die Reaktivharzmischung. Ferner ergibt sich nach obiger Formel ein bevorzugter Bereich für $\Sigma(w_i)$ unter Berücksichtigung lediglich der Monoalkylenglykoldi(meth)acrylate und Oligoalkylenglykoldi(meth)acrylate mit zwei oder drei Alkylenglykol-Wiederholeinheiten von 0,1 bis 20, weiter bevorzugt von 0,8 bis 12 und besonders bevorzugt von 0,8 bis 10, jeweils bezogen auf die Harzkomponente; oder bevorzugt 0,28 bis 50, weiter bevorzugt 2 bis 30 und besonders bevorzugt 2 bis 25, jeweils bezogen auf die Reaktivharzmischung. Für die Polyalkylenglykoldi(meth)acrylate, insbesondere das PEG200DMA ergibt sich nach obiger Formel ein bevorzugter Bereich für $\Sigma(w_i)$ - wiederum nur die Polyalkylenglykoldi(meth)acrylate, insbesondere das PEG200DMA (mit n = 4) berücksichtigt - von 2 bis 20, und besonders bevorzugt 5 bis 15, jeweils bezogen auf die Harzkomponente; oder bevorzugt von 5 bis 50 und besonders bevorzugt 12 bis 38, jeweils bezogen auf die Reaktivharzmischung.

*Reaktivharz*

Als Reaktivharz sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättigter Polyester, die in der erfindungsgemäßen Reaktivharzmischung verwendet werden können, werden in folgende Kategorien eingeteilt:

(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;

(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;

(3) Bisphenol-A-fumarate: diese basieren auf ethoxyliertem Bisphenol-A und Fumarsäure;

(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diese Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion eines Diacids, z.B. Maleinsäure, mit Dicyclopentadien, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Beispiele für derartige Epoxy(meth)acrylate sind solche der Formel (III)

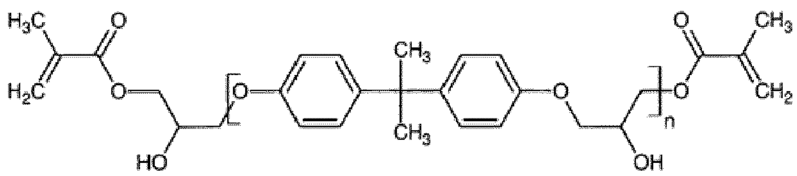

(III),

worin n für eine Zahl grösser oder gleich 1 steht (wenn Gemische verschiedener Moleküle mit unterschiedlichen n-Werten vorliegen und durch die Formel (III) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (IV)

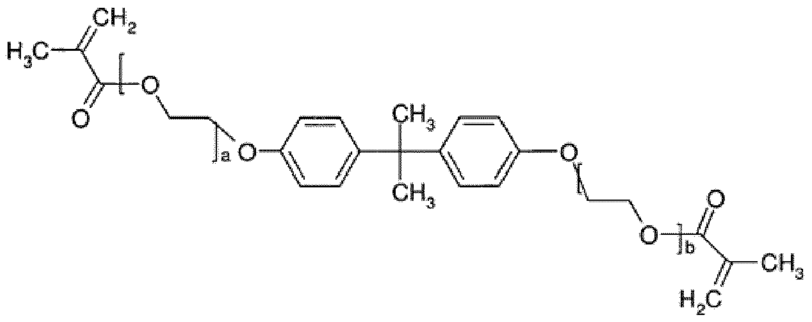

(IV),

worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (IV) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Der prozentuale Anteil (in Gew.-% des Reaktivharzes) von Backbone-Harz in dem erfindungsgemäßen Reaktivharz beträgt vorteilhafterweise mehr als etwa 5%, bevorzugt mehr als etwa 15%, und besonders bevorzugt mehr als etwa 20%. Der prozentuale Anteil (in Gew.-% des Reaktivharzes) von Backbone-Harz in dem Reaktivharz beträgt vorteilhafterweise von etwa 5% bis etwa 90%, bevorzugt von etwa 8% bis etwa 80%, bevorzugter von etwa 10% bis etwa 60%, bevorzugter von etwa 20% bis etwa 55%, noch bevorzugter von etwa 25% bis etwa 55%, besonders bevorzugt von etwa 25% bis etwa 50% und ganz besonders bevorzugt von etwa 28% bis etwa 45%.

*Weitere Reaktivverdünner*

Neben der Reaktivverdünnermischung aus dem ersten Reaktivverdünner (RV1) und dem zweiten Reaktivverdünner (RV2) kann die erfindungsgemäße Reaktivharzmischung ferner einen oder mehrere weitere Reaktivverdünner umfassen, mit der Maßgabe, dass der weitere oder die weiteren Reaktivverdünner nicht unter Alkylenglykoldi(meth)acrylaten ausgewählt sind.

Geeignete weitere Reaktivverdünner sind in den Anmeldungen EP 1 935 860 A1 und DE 195 31 649 A1 beschrieben. Vorzugsweise enthält die Reaktivharzmischung als Reaktivverdünner einen (Meth)acrylsäureester, wobei besonders bevorzugt aliphatische oder aromatische $C_5$-$C_{15}$-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N,N*-Dimethylaminoethyl(meth)acrylat, *N,N*-Dimethylaminomethyl(meth)acrylat, Acetoacetoxyethyl(meth)acrylat, Isobornyl(meth)acrylat, 2-Ethylhexyl(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.$^{26}$-decan, Dicyclopentenyloxyethylcrotonat, 3-(Meth)acryloyl-oxymethyl-tricylo-5.2.1.0.$^{26}$-decan, 3-(Meth)cyclopentadienyl(meth)acrylat, und Decalyl-2-(meth)acrylat; Solketal(meth)acrylat, Cyclohexyl(meth)acrylat, Phenoxyethyldi(meth)acrylat, Methoxyethyl(meth)acrylat, *tert*-Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert*-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Bevorzugte Reaktivverdünner sind die in den Beispielen verwendeten Reaktivverdünner, bevorzugt etwa in den in den Beispielen angegebenen Mengen.

Die Reaktivverdünnermischung wird bevorzugt in einer Menge bis etwa 80 Gew.-%, besonders bevorzugt von etwa 10 bis etwa 60 Gew.-%, noch bevorzugter von etwa 30 bis etwa 60 Gew.-%, bezogen auf die Reaktivharzmischung, im erfindungsgemäßen Reaktivharz vorhanden.

*Inhibitoren*

Sowohl zur Stabilisierung des Reaktivharzes oder der das Reaktivharz enthaltenden Reaktivharzmischung oder anderer das Reaktivharz bzw. die Reaktivharzmischung enthaltender Zusammensetzungen, wie eine Reaktivharzkomponente, als auch zur Einstellung der Harzreaktivität können in der erfindungsgemäßen Reaktivharzmischung ein oder mehrere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter phenolischen Inhibitoren und nicht-phenolischen Inhibitoren, insbesondere Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N*-oxyl- oder Tetrahydropyrrol-*N*-oxyl-Typ, in Betracht, wie Aluminium-*N*-nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, TEMPOL, TEMPO und dergleichen.

Ferner können in para-Stellung zur Hydroxylgruppe substituierte Pyrimidinol- oder Pyridinol-Verbindungen, wie sie in der Patentschrift DE 102011 077 248 B1 beschrieben sind, als Inhibitoren eingesetzt werden.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus N-Oxyl-Radikalen, Catecholen, Catecholderivaten und Phenothiazinen und ein Gemisch von zwei ider mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder allein

oder als Kombination von zweien oder mehreren davon verwendet werden. Die Kombination von phenolischen und nicht-phenolischen Inhibitoren ist bevorzugt.

Der Inhibitor oder die Inhibitormischung wird in der Fachwelt bekannten üblichen Mengen zugesetzt, bevorzugt in einer Menge von etwa 0,0005 bis etwa 2 Gew.-% (bezogen auf das - letztendlich damit hergestellte - Reaktivharz), stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz).

*Härtersystem*

Für die Härtung der radikalisch härtbaren Verbindung wird ein Härtungsmittel verwendet.

Bevorzugt wird ein Härtersystem verwendet, welches das Härtungsmittel und einen Beschleuniger umfasst.

Dabei kann der Beschleuniger der Reaktivharzmischung zugegeben werden.

Die Härtung des Reaktivharzes kann mit einem Peroxid als Initiator initiiert werden. Dementsprechend beinhaltet in einer Ausführungsform das Härtersystem

- mindestens einen für die Härtung mit Peroxiden üblicherweise verwendeten Beschleuniger und
- als Initiator ein Peroxid.

Alle dem Fachmann bekannten Peroxide, die zum Härten von Epoxid(meth)acrylatharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet.

Das Peroxid kann in seiner Reinform oder als Bestandteil einer Mischung verwendet werden. Typischerweise wird es als Bestandteil einer Mischung verwendet, insbesondere als Bestandteil einer Härterkomponente (B) eines Reaktivharz-Systems, wie es weiter unten genauer beschrieben wird. Die in den Beispielen verwendete Härterkomponente bzw. eine Härterkomponenten mit denselben Bestandteilen ist besonders bevorzugt.

Auch die Verwendung von organisch substituierten Ammoniumpersulfaten (beispielsweise N'N'N'N'-Tetrabutylammonium- oder N'N'N'-Tricapryl-N'-methylammoniumpersulfat ist möglich.

Neben dem Peroxid kann das Härtersystem noch ein Phlegmatisierungsmittel enthalten, um das Peroxid zu stabilisieren. Entsprechende Phlegmatisierungsmittel sind aus der DE 3226602 A1, EP 0432087 A1 und EP 1 371 671 A1 bekannt.

Ein solches Härtersystem enthält bevorzugt Wasser als Phlegmatisierungsmittel. Neben dem Wasser kann das Härtersystem noch weitere Phlegmatisierungsmittel enthalten, wobei Wasser als alleiniges Phlegmatisierungsmittel bevorzugt ist, um keine Verbindungen einzubringen, die eine weichmachende Wirkung haben.

Bevorzugt liegt das Peroxid zusammen mit dem Wasser als Suspension vor. Entsprechende Suspensionen sind in unterschiedlichen Konzentrationen kommerziell erhältlich, wie beispielsweise die wässrigen Dibenzoylperoxid-Suspensionen von United Initiators (z.B. BP40SAQ), Perkadox 40L-W (Fa. Nouryon), Luperox® EZ-FLO (Fa. Arkema), Peroxan BP40W(Fa. Pergan).

Das Peroxid kann in einer Menge von 0,25 bis 35 Gew.-%, bevorzugt 1 bis 30 Gew.-%, besonders bevorzugt 5 bis 25 Gew.-%, bezogen auf die Härterzusammensetzung, in den Reaktivharzsystem enthalten sein.

In dem beschriebenen Härtersystem wird zusätzlich zu dem Peroxid ein Beschleuniger verwendet. Hierdurch wird die Härtungsreaktion beschleunigt. Dieser Beschleunigerwird der Reaktivharzmischung bzw. der Reaktivharzkomponente zugegeben, um diesen räumlich getrennt vom Peroxid zu lagern und so dessen vorzeitigen Zerfall zu verhindern.

Geeignete Beschleuniger sind dem Fachmann bekannt. Diese sind zweckmäßig Amine.

Geeignete Amine sind unter folgenden Verbindungen ausgewählt, die beispielsweise in der Anmeldung US

2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl(2-chloroethyl)amin, 2-Ethylhexylamin, Bis(2-chloroethyl)amin, 2-Ethylhexylamin, Bis(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis(2-hydroxyethyl)oleylamin, Tris-[2-(2-hydroxy-ethoxy)-ethyl]amin, 3-Amino-1-propanol, Methyl(3-aminopropyl)ether, Ethyl-(3-aminopropyl)ether, 1,4-Butandiol-bis(3-aminopropyl)ether, 3-Dimethylamino-1-propanol, 1-Amino-2-propanol, 1-Diethylamino-2-propanol, Diisopropanolamin, Methyl-bis(2-hydroxypropyl)amin, Tris(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäureisopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis(hydroxyethyl)anilin, Chloranilin, Aminophenole, Aminobenzoesäuren und deren Ester, Benzylamin, Dibenzylamin, Tribenzylamin, Methyldibenzylamin, $\alpha$-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diaminodicyclohexylmethan, Diamino-dimethyl-dicyclohexylmethan, Phenylendiamin, Xylylendiamin, Diaminobiphenyl, Naphthalindiamine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind symmetrisch oder asymmetrisch substituierten Anilin- und Toluidin-Derivate und N,N-Bis(hydroxy)alkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin, N-Methyl-N-hydroxyethyl-p-toluidin, N-Ethyl-N-hydroxyethyl-p-toluidin sowie die analogen o- oder m-Toluidine und 4,4'-Bis(dimethylamino)diphenylmethan und/oder die Leucoformen der Farbstoffe Kristallviolett oder Malachitgrün.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Bevorzugte Beschleuniger sind N,N-Bis(2-hydroxypropyl)toluidine, N,N-Bis(2-hydroxyethyl)toluidine und para-Toluidin Ethoxylat (Bisomer® PTE).

In dieser, bevorzugten, Ausführungsform kann der Beschleuniger in einer Menge von 0,01 bis 10 Gew.-%, bevorzugt 0,1 bis 5 Gew.-%, besonders bevorzugt 0,1 bis 3 Gew.-%, bezogen auf die Harzkomponente, in den Reaktivharz-System enthalten sein.

Alternativ kann für die Härtung ein Härtersystem verwendet werden, welches peroxidfrei ist und die Bestandteile

- mindestens eine Manganverbindung als Beschleuniger und
- eine 1,3-Dioxoverbindung als Initiator

beinhaltet. Hierzu wird auf die DE 10 2011 078 785 A1 verwiesen.

Geeignete 1,3-Dioxoverbindungen sind Verbindungen der allgemeinen Formel (V)

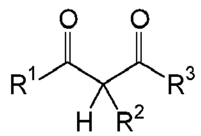

(V),

in der

$R^1$ und $R^3$ jeweils unabhängig voneinander eine unverzweigte oder verzweigte, gegebenenfalls substituierte $C_1$-$C_4$-Alkylgruppe oder eine $C_1$-$C_4$-Alkoxygruppe sind,

$R^2$ eine unverzweigte oder verzweigte, gegebenenfalls substituierte $C_1$-$C_4$-Alkylgruppe oder eine $C_1$-$C_4$-Alkoxygruppe ist, oder zusammen mit $R^1$ oder $R^3$ einen gegebenenfalls substituierten fünf- oder sechsgliedrigen aliphatischen Ring bildet, welcher gegebenenfalls Heteroatome im oder am Ring umfasst.

In diesem Härtersystem ist es wesentlich, dass in der Verbindung der Formel (V) das Kohlenstoffatom, welches die zwei Carbonylgruppen miteinander verbindet, genau ein an dieses Kohlenstoffatom gebundenes Wasserstoffatom aufweist.

Bevorzugt ist die Verbindung der allgemeinen Formel (V) eine Verbindung der Formel (VI)

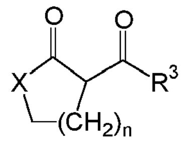

(VI),

in der unabhängig X = C, O, n = 1, 2 und $R^3$ eine unverzweigte oder verzweigte, gegebenenfalls substituierte $C_1$-$C_4$-Alkylgruppe oder eine $C_1$-$C_4$-Alkoxygruppe ist. X ist stärker bevorzugt O. n ist stärker bevorzugt 1. $R^3$ ist stärker bevorzugt eine $C_1$-$C_4$-Alkylgruppe.

Besonders bevorzugt ist die Verbindung der Formel (V) 2-Methyl-2,4-pentandion, α-Acetylbutyrolacton, Cyclopentanon-2-carbonsäureethylester oder Cyclopentanon-2-carbonsäuremethylester, wobei α-Acetylbutyrolacton am stärksten bevorzugt ist.

Als Beschleuniger wird eine Manganverbindung, insbesondere ein Mangansalz oder ein Mangankomplex verwendet. Es können auch Gemische von Mangansalzen und/oder Mangankomplexen verwendet werden.

Als besonders geeignet haben sich Mangansalze oder Mangankomplexe, insbesondere basierend auf 1,3-Dioxoverbindungen, wie Acetylacetonat (Petan-2,4-dion), und Carbonsäuren, wie Naphthenate, Octoate, Ethylhexanoate oder gesättigte Fettsäuren, erwiesen. Hinsichtlich der Manganverbindung bestehen keine Einschränkungen. Zweckmäßig ist die Manganverbindung in unpolaren Lösungsmitteln löslich. Ganz besonders geeignet ist Mn(II)-octoat.

Ebenfalls alternativ kann für die Härtung ein Härtersystem verwendet werden, welches die Bestandteile:

- als Beschleuniger mindestens ein Metallsalz und
- als Initiator mindestens eine Thiol- und/oder Thiolester-Gruppen beinhaltende Verbindung,

beinhaltet.

Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können. Beispiele für Thiole sind Thioglycerin, Methyl-, Ethylmercaptan und höhere Homologe z.B. Dodecylmercaptan; Dimercaptane, wie Dimercaptopropansulfonsäure, Dimercaptobernsteinsäure, Dithiothreitol; Poly(ethylenglykol)dithiole, der allgemeinen Formel $HS-[CH_2-CH_2-O]_n-CH_2-CH_2-SH$, worin n für eine Zahl zwischen 0 bis 10 steht; flüssige Polysulfidpolymere mit Thiol-Endgruppen z.B. Thioplast G Typen der Firma Akzo Nobel; Polymercaptanhärter und -vernetzer z.B. SIQ-Amin 999 der Firma S.I.Q.-Kunstharze GmbH; ethoxylierte und/oder propoxylierte Alkohole aus Mono-, Di-, Tri-, Tetra-, Pentaolen und/oder anderen Polyolen mit Thiolendgruppen z.B. Capcure 3-800 der Firma Cognis, oder die nachfolgend als insbesondere geeigneten Thiole genannten Verbindungen. Als besonders geeigneter Thiolester sei hier der Octanthiolsäure-S-[3(triethoxysilyl)propyl]ester erwähnt. Beispiele für insbesondere geeignete Thiole sind Glykoldi(3-mercaptopropionat), Trimethylolpropantri(3-mercaptopropionat), Pentaerythritoltetra(3-mercaptopropionat), Dipentaerythritolhexa-3-mercaptopropionat, ethoxyliertes Trimethylolpropan-tris(3-mercaptopropionat) mit unterschiedlichen Ethoxylierungsgraden (z.B. ETTMP 700 und ETTMP 1300 der Firma Bruno Bock), Tris[2-(3-mercaptopropionyloxy)ethyl]isocyanurat, 3-Mercaptopropyltrimethoxysilan.

Als weitere Alternative kann für die Härtung ein Härtersystem verwendet werden, welches die folgenden Bestandteile beinhaltet:

- als Beschleuniger mindestens ein Metallsalz und
- als Initiator mindestens eine CH-acide Verbindung der Formel (VII)

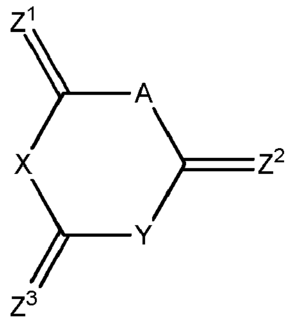

(VII),

worin

(i)

-A- für $-C(R^1)(R^2)-$ steht,
-X- für eine Bindung, für $-NR^3-$ oder für $-(CR^4R^5)_p-$ steht, oder für -O- steht,
Y für $NR^6$ oder für $(CR^7R^8)_q$ steht, oder für O steht,
wobei wenn X für O steht auch Y für O steht;
wobei vorzugsweise X für $(CR^4R^5)_p$ steht und Y für $CR^7R^8$ steht,
oder X für $NR^3$ und Y für $NR^6$ steht;
$Z^1$ für O, S, S=O oder $S(=O)_2$ steht,
$Z^2$ für O, S, S=O oder $S(=O)_2$ steht,
$Z^3$ für O, S, S=O oder $S(=O)_2$ oder für $R^9$ und $R^{10}$ steht,
p für 1, 2 oder 3 steht, vorzugsweise für 1 oder 2
q für 1, 2 oder 3 steht, vorzugsweise für 1;
und die Reste $R^1$, $R^2$, $R^3$, $R^4$, $R^5$, $R^6$, $R^7$, $R^8$, $R^9$ und $R^{10}$ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen;
vorzugsweise ausgewählt aus O, N, wie NH oder N-Alkyl, und S aufweisen, mit der Maßgabe, dass mindestens einer der Reste $R^1$ und $R^2$ Wasserstoff bedeutet,

oder
(ii) offenkettige Verbindungen,
worin das die Brücke bildende Glied $-C(=Z^3)-$ fehlt,

-A- für $-C(R^1)(R^2)-$ steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkoxycarbonylmethylgruppe oder $C_1$-$C_4$-Alkylcarbonylmethylgruppe stehen,
$R^1$ und $R^2$ beide Wasserstoff bedeuten und
$Z^1$ und $Z^2$ die genannten Bedeutungen haben;
oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende $C_1$-$C_4$-Alkylgruppe oder $C_1$-$C_4$-Alkoxygruppe oder $C_1$-$C_4$-Alkoxycarbonylmethylgruppe oder $C_1$-$C_4$-Alkylcarbonylmethylgruppe steht,
Y und $Z^2$ gemeinsam mit dem bindenden Kohlenstoffatom -CN bedeuten,
$Z^1$ die oben genannten Bedeutungen hat, und
$R^1$ und $R^2$ jeweils wie oben definiert sind mit der Maßgabe, dass mindestens einer der Reste Wasserstoff bedeutet;
und/oder Salze davon.

Bevorzugte Beispiele für solche Verbindungen sind 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintron) oder

2-Thiobarbitursäure (4,6-Dihydroxy-2-Mercaptopyrimidin), 1,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3- dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 genannte 1,3-Dioxoverbindungen.

Bei den als Beschleuniger in Form eines Metallsalzes, was auch Metallkomplexe und Metalloxide einschließt, verwendeten Komponenten handelt es sich in beiden Fällen vorzugsweise um ein oder mehrere Metallsalze oder insbesondere um Salze von organischen und/oder anorganischen Säuren mit Metallen, z.B. ausgewählt aus Kobalt, Zirkonium, Zink, Cer, Zinn, Wismut oder vorzugsweise Vanadium, Mangan, Kupfer oder Eisen, oder Gemischen von zwei oder mehr davon, wobei die organischen Säuren vorzugsweise gesättigt sind, wobei Vanadium und Eisen oder insbesondere Mangan und Kupfer, ggf. in Gegenwart eines oder zweier Co-Beschleuniger mit Metallanteil aus der Gruppe der oben genannten Metalle, bevorzugt ist, insbesondere in Form von Salzen oder Komplexen mit anorganischen Säuren und/oder Carboxylatresten, wie Carboxylaten mit $CH_3$, $C_2$-$C_{20}$-Alkyl, einem $C_6$-$C_{24}$-Arylrest oder $C_7$-$C_{30}$-Aralkylrest, beispielsweise Oktoat, z.B. 2-Ethylhexanoat (Isooctanoat), ferner Neodecanoat, oder Acetylacetonat. Besonders bevorzugt sind Mangancarbonat oder -carboxylate, wie Mnacetat oder Mn-octoat, Kupfercarboxylate, wie Kupferoctoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat und Kupferchlorid umfasst.

In einer weiteren Alternative kann für die Härtung ein Härtersystem verwendet werden, welches die folgenden Bestandteile

- als Beschleuniger mindestens ein Metallsalz und
- als Initiator mindestens ein Aldehyd und/oder Keton und mindestens ein primäres Amin, und/oder
- b2) mindestens ein Imin, welches ein oder mehrere Imin-Strukturinkremente der Formel (VIII) beinhaltet:

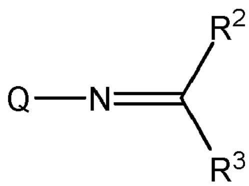

(VIII),

worin unabhängig voneinander:

Q den organischen Rest des (jeweils) verwendeten Amins darstellt, oder für Wasserstoff steht; und

$R^2$ und $R^3$ unabhängig voneinander Wasserstoff und/oder einen unsubstituierten oder substituierten, gegebenenfalls Doppelbindungen und/oder Heteroatome aufweisenden, ein- oder mehrfach verzweigten oder geradkettigen organischen Rest, welcher mindestens eine aliphatische, heteroaliphatische, alicyclische oder heterocyclische Molekülstruktur, oder eine Kombination von zwei oder mehr der vorgenannten Molekülstrukturen beinhaltet, bedeutet;

und/oder Salze davon,

beinhaltet.

Bevorzugt liegt das Molekulargewicht der Imin-Strukturinkremente der Formel (VIII) beinhaltenden Imine bei 2000 Dalton (g/mol) oder niedriger, beispielsweise bei 1000 Dalton oder niedriger. Auch die Aldehyde und/oder Ketone haben jeweils vorzugsweise Molekulargewichte in diesen Bereichen.

Dieses Härtersystem kann als fertige Härterzusammensetzung (beispielsweise mit mikroverkapselten Bestandteilen a) und b)) vorliegen oder vorzugsweise erst bei der Mischung mit weiteren Bestandteilen einer Kunstharzzusammensetzung (gewissermaßen als Zusammensetzung (Mischung)) ausgeformt werden, beispielsweise bei der Verwendung.

Die beinhalteten bzw. verwendeten Aldehyde, Ketone, Amine, Aldimine oder Ketimine sind bekannt oder nach an sich bekannten Verfahren herstellbar/erhältlich bzw. werden vorzugsweise danach erhalten. Die Imine können vor der Anwendung (z.B. zur Befestigung von Verankerungselementen) oder auch erst "in situ" synthetisiert bzw. erhalten werden. Mögliche erfindungsgemäße Verfahren sind also (t) die separate vorherige Herstellung und/oder (tt) die "in situ" Herstellung, bei der der Aldehyd/Keton und das primäre Amin auf unterschiedliche Komponenten des Befestigungssystems aufgeteilt werden und beispielsweise am Ort der Anwendung vermischt werden und/oder (ttt) die "in situ" Herstellung

in einer Komponente des Befestigungssystems, bei der der Aldehyd/Keton und das primäre Amin bei der Zubereitung der jeweiligen Komponente gemeinsam vermischt werden. Insbesondere die Imine gemäß (t) werden durch Kondensation unter Abspaltung von Wasser aus ein oder mehreren Aminen mit einem oder mehreren Aldehyden bzw. Ketonen erhalten. Entsprechende Reaktionsbedingungen für die separate vorherige Umsetzung (t) sind dem Fachmann bekannt.

Beispiele für geeignete Amine und Aldehyde oder Ketone finden sich insbesondere in der DE 10 2004 035 542 A1, EP 1 329 469 A1, EP 1 975 190 A1 und der EP 2 017 260.

Die als solche zugesetzten oder zur Synthese der Imine geeigneten primären Amine umfassen beispielsweise Mono-, Di- oder Polyamine, oder Mischungen von zwei oder mehr davon. Die einsetzbaren Mono-, Di- und/oder Polyamine können sowohl linear als auch verzweigt sein. Das Molekülgerüst der Mono- und/oder Di- und/oder Polyamine kann aliphatische, heteroaliphatische, alicyclische, heterocyclische, aromatische, aliphatisch-aromatische und Silan/Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH2), zur Ausbildung des Aldimins bzw. Ketimins, enthalten sein.

Die Mono-, Di- oder Polyamine sind bevorzugt aus der Gruppe der Alkyl- oder Alkylen(mono oder di)amine (wie z.B.: 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan, kommerziell erhältliche aminfunktionalisierte Polyoxyalkylene [Jeffamine] der Firma Huntsman Corp, oder z.B.: Triethylentetramin und/oder höhere Homologe), der Cycloalkyl- oder Cycloalkylen(mono oder di)amine (wie z.B.: Isophorondiamin, 1,3-Bisaminomethylcyclohexan, TCD-Diamin), der Heterocyloalkyl- oder Heterocycloalkylen(mono oder di)amine (wie z.B.: Aminoethylpiperazin), der Aminole bzw. Aminoalkohole (wie z.B. 1,3-Diaminopropan-2-ol), und der aliphatisch-aromatischen(mono oder di)amine (wie 1,3- oder 1,4-Benzoldimethanamin), ausgewählt und/oder aus der Gruppe der aminosilanisierten Füllstoffe.

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) ausgewählt sein.

Als Amine besonders interessant sind auch Aminoalkylsilane, die mindestens eine hydrolysierbare Gruppe, wie Alkoxy, z.B. Methoxy oder Ethoxy - am Silicium gebunden - beinhalten. Diese können (durch entstehendes Reaktionswasser oder zugeführtes Wasser) hydrolysieren und kondensieren und so Oligomere bilden, die mehrere Aminogruppen tragen und die REACH-Definition für Polymere erfüllen. Imine aus derartigen Aminoalkylsilanen bilden daher die Grundlage für besonders bevorzugte Verkörperungen der Erfindung. Bevorzugte derartige Aminoalkylsilane sind beispielsweise ausgewählt aus der Gruppe, die ein oder mehrere der folgenden Verbindungen umfasst: Aminoalkyltri- oder -dialkoxysilane, wie 3-Aminopropyltrimethoxysilan oder 3-Aminopropyltriethoxysilan, und N-(Aminoalkyl)aminoalkyltri-oder -dialkoxysilane, wie N-(2-Aminoethyl)-3-aminopropyltrimethoxysilan oder N-(2-Aminoethyl)-3-aminopropylmethyldimethoxysilan, ferner Ureidoalkyltrimethoxysilane, wie 3-Ureidopropyltrimethoxysilan.

In einer weiteren besonderen Ausführungsform der Erfindungsgegenstaende können als Polyamine aminosilanisierte Füllstoffe, die primaere Aminogruppen tragen, wie aminosilanbehandeltes Quarzmehl (z.B Silbond AST(R) der Fa. Quarzwerke GmbH), aminosilanbehandelte Kieselerde (z.B. Aktisil AM(R) von Hoffmann Mineral), oder aminosilan-behandelte pyrogene Kieselsäuren, vorgesehen und beinhaltet sein.

Bei den als solche zugesetzten oder zur Synthese der Aldimine und/oder Ketimine verwendbaren bzw. geeigneten Aldehyden und Ketonen handelt es sich insbesondere um solche der Formel (IX)

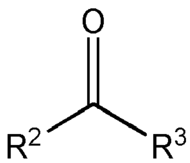 (IX),

worin:

$R^2$, $R^3$ unabhängig voneinander Wasserstoff und/oder einen unsubstituierten oder substituierten und/oder einen gegebenenfalls Doppelbindungen und/oder Heteroatome aufweisenden ein- oder mehrfach verzweigten oder geradkettigen organischen Rest, welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden alpha-Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone

seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden alpha-Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe stehenden alpha-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder beta-Ionone genannt.

Die vorgenannten Beispiele für geeignete Amine, bevorzugte und besonders bevorzugte Aldehyde und/oder Ketone sollen den Umfang geeigneter Amine, Aldehyde und/oder Ketone nicht limitieren, sondern lediglich einige Beispielverbindungen mit den oben genannten, als geeignet, bevorzugt und als besonders bevorzugt definierten, Strukturmerkmalen zur Veranschaulichung aufzeigen.

Insbesondere bevorzugt sind auch die in den Beispielen genannten Aldehyde, Ketone bzw. synthetisierten Aldimine und/oder Ketimine und die als solche zugesetzten und/oder zur Synthese der Aldimine und/oder Ketimine verwendeten, spezifischen Amine, Ketone und Aldehyde, oder Gemische von zwei oder mehr davon.

Gegenstand der vorliegenden Erfindung ist auch eine Reaktivharzkomponente, welche die erfindungsgemäße Reaktivverdünnermischung und das erfindungsgemäße Reaktivharzmischung enthält.

Die erfindungsgemäße Reaktivharzkomponente kann neben der erfindungsgemäßen Reaktivharzmischung Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Zur Herstellung einer Reaktivharzkomponente für bauliche Anwendungen, inbesondere für die chemische Befestigung, können dem erfindungsgemäßen Reaktivharz übliche Füllstoffe zugegeben werden. Diese Füllstoffe sind typischerweise anorganische Füllstoffe, wie beispielsweise weiter unten beschrieben.

Der Anteil des erfindungsgemäßen Reaktivharzes in der Reaktivharzkomponente beträgt bevorzugt von etwa 10 bis etwa 70 Gew.-%, stärker bevorzugt von etwa 20 bis etwa 60 Gew.-%, noch stärker bevorzugt von etwa 25 bis etwa 50 Gew.-%, bezogen auf die Reaktivharzkomponente. Dementsprechend beträgt der Anteil der gesamten Füllstoffe und Additive bevorzugt von etwa 90 bis etwa 30 Gew.-%, stärker bevorzugt von etwa 80 bis etwa 40 Gew.-%, noch stärker bevorzugt von etwa 75 bis etwa 50 Gew.- %, bezogen auf die Reaktivharzkomponente.

*Füllstoffe*

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon. Ganz besonders bevorzugt ist für die Reaktivharzkomponente (A) eine Mischung aus Zement (insbesondere Aluminatzement (oft

auch als Tonerdezement bezeichnet) oder Portlandzement), pyrogener Kieselsäure und Quarzsand. Für die Härterkomponente (B) ist pyrogene Kieselsäure als alleiniger Füllstoff oder als einer von mehreren Füllstoffen bevorzugt; besonders bevorzugt sind neben der pyrogenen Kieselsäure noch einer oder mehrere weitere Füllstoffe vorhanden.

*Additive*

Weitere denkbare Zusätze sind ferner Rheologieadditive, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE102010008971A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktivharzmörtel, Härter), beispielsweise von 1 bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, oder Glykole. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 und WO 02/079293 sowie WO 2011/128061 A1.

In einer Ausführungsform kann die Reaktivharzkomponente zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente (A) enthalten.

Gegenstand der vorliegenden Erfindung ist auch ein Reaktivharz-System. Das erfindungsgemäße Reaktivharz-System ist ein Zwei- oder Mehrkomponenten-System, bevorzugt ein Zweikomponenten-System. Eine der Komponenten ist die erfindungsgemäße Reaktivharzkomponente (A), die andere eine Härterkomponente (B). Letztere enthält einen Initiator, mit dem bei Vermischen der Komponenten die Polymerisation des Reaktivharzes in Gang gesetzt wird.

Bei einer bevorzugten Ausführungsform des erfindungsgemäßen Reaktivharz-Systems ist das Reaktivharz-System ein Zweikomponenten-System und enthält die Reaktivharzkomponente (A) neben dem erfindungsgemäßen Reaktivharz zusätzlich noch eine hydraulisch abbindende oder polykondensierbare anorganische Verbindung, insbesondere Zement, und die Härterkomponente (B) neben dem Initiator für die Polymerisation des Reaktivharzes noch Wasser. Derartige Hybridmörtelsysteme sind ausführlich in DE 4231161 A1 beschrieben. Dabei enthält die Komponente (A) vorzugsweise als hydraulisch abbindende oder polykondensierbare anorganische Verbindung Zement, beispielsweise Portlandzement oder Tonerdezement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden. Die Komponente (A) kann als polykondensierbare anorganische Verbindung auch silikatische, polykondensierbare Verbindungen, insbesondere lösliches, gelöstes und/oder amorphes Siliziumdioxid enthaltende Stoffe wie z.B. polare, nicht nachbehandelte pyrogene Kieselsäure umfassen.

Des Weiteren ist es bevorzugt, dass die Komponente (A) auch ein Thixotropiermittel enthält, vorzugsweise apolar nachbehandelte pyrogene Kieselsäure, besonders bevorzugt mit Polydimethylsiloxan (PDMS) nachbehandelte pyrogene Kieselsäure, ganz besonders bevorzugt die in den Beispielen verwendete apolar nachbehandelte pyrogene Kieselsäure.

In einer besonders bevorzugten Ausführungsform sind die Bestandteile des erfindungsgemäßen Reaktivharzes bzw. der erfindungsgemäßen Reaktivharzkomponente eines oder mehrere der Bestandteile, welche in den erfindungsgemäßen Beispielen genannt werden. Ganz besonders bevorzugt sind Reaktivharze bzw. Reaktivharzkomponenten, welche dieselben Bestandteile enthalten oder aus denselben Bestandteilen bestehen, wie sie in den einzelnen erfindungsgemäßen Beispielen genannt werden, und zwar bevorzugt in etwa in den dort genannten Anteilen.

Die erfindungsgemäßen Reaktivharze sind in vielen Bereichen, bei denen sonst üblicherweise ungesättigte Polyesterharze, Vinylesterharze oder Vinylesterurethanharze Verwendung finden, einsetzbar. Sie können insbesondere zur Herstellung von Reaktivharzmörteln für bauliche Anwendungen, wie die chemische Befestigung verwendet werden.

Das erfindungsgemäße Reaktivharz findet üblicherweise Verwendung als Harzbestandteil in der Reaktivharzkomponente eines Mehrkomponenten-Systems, typischerweise einem Zweikomponenten-System aus einer Reaktivharzkomponente (A) und einer Härterkomponente (B). Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Ein solches Reaktivharz-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Ein weiterer Gegenstand der Erfindung ist die Verwendung des erfindungsgemäßen Reaktivharzes und/oder eines Reaktivharz-Systems als Bestandteil eines aushärtbaren Bindemittels oder als aushärtbares Bindemittel, insbesondere zur Befestigung von Verankerungsmitteln in Bohrlöchern verschiedenen Untergrunds und zum baulichen Kleben. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Ein weiterer Gegenstand der Erfindung ist die Verwendung einer erfindungsgemäßen Mischung aus einem ersten Reaktivverdünner und einem zweiten Reaktivverdünner zur Verbesserung der Hochtemperatureigenschaften eines ausgehärteten mehrkomponentigen Reaktivharzsystems für die chemische Befestigung.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

## AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

Hinsichtlich des verwendeten PEG200DMA ist anzumerken, dass die Anzahl der Ethylenglykol-Wiederholeinheiten n nicht eindeutig ist. Aus der Produktbezeichnung, PEG200DMA, kann geschlossen werden, dass dem Monomer ein Polyethylenglykol der Molmasse 200 g/mol zugrunde liegt. Das entspricht für die Formel $HO\text{-}(\text{-}CH_2\text{-}CH_2\text{-}O\text{-})_n\text{-}H$ einem Wert für n=4,2. Berücksichtigt man bei der der Molmasse nur die Wiederholeinheiten $(\text{-}CH_2\text{-}CH_2\text{-}O\text{-})_n$, kann n=4,5 angegeben werden. Da es sich bei PEG200, aus dem PEG200-Dimethacrylat hergestellt wird, um ein technisches Produkt handelt und die Hersteller des genannten Dimethacrylates (Sartomer, Evonik sowie GEO Speciality Chemicals) in ihren technischen Datenblättern n=4 bzw. n~4 angeben, wird primär von dieser Angabe ausgegangen.

Liste der in den Beispielen und Referenzen verwendeten Bestandteile (Erklärung der Abkürzungen) sowie ihrer Handelsnamen und Bezugsquellen:

| | **Beschreibung** |
|---|---|
| UMA121 | Urethanmethacrylat-Harz gemäß WO 2019/007667, Beispiel C1 |
| mUMA | Unverlängertes Urethanmethacrylat-Harz gemäß WO 2019/007667, Beispiel E1 |
| bisGMA | Epoxyacrylat-Harz (verwendet als Mischung mit 1,4-BDDMA) Handelsname: Ecocryl 05345 (Fa. Momentive) |
| SR348L | Ethoxylated Bisphenol-A-Dimethacrylat; Handelsname: SR348L (Fa. Sartomer) |
| PEG200DMA | Polyethylenglykol(200)Dimethacrylat; Handelsname: Visiomer PEG200DMA (Fa. Evonik) |
| TREGDMA | Tri(ethylenglykol)dimethacrylat; Handelsname: SR205 (Fa. Sartomer) |
| DEGDMA | Di(ethylenglykol)dimethacrylat; (Fa. Aldrich) |
| 1,2-EGDMA | 1-2,Ethylenglykoldimethacrylat; Handelsname: SR 206 (Fa. Sartomer) |
| 1,4-BDDMA | 1,4-Butandioldimethacrylat; Handelsname:Visiomer 1,4-BDDMA (Fa. Evonik) |
| 1,6-HDDMA | 1,6-Hedandioldimethacrylat; Handelsname: SR239EU (Fa. Sartomer) |
| TMPTMA | Trimethylolpropantrimethacrylat; Handelsname: SR350 (Fa. Sartomer) |
| MEMO | 3-(Trimethoxysilyl)propyl methacrylate 98%; Handelsname: keiner (Fa. Aldrich) |
| DiPpT | Dihydroxypropyl-p-toluidin; Handelsname: keiner (Fa. Saltigo) |
| tBBK | 4-tert.-Butylbrenzkatechin; Handelsname: keiner (Fa. Aldrich) |
| Tempol | 4-Hydroxy-2,2,6,6-tetramethylpiperidinyloxyl; Handelsname: 4-Hydroxy-TEMPO (Fa. BASF) |
| Additiv | Copolymer-Phosphat; Handelsname: BYK W9010 (Fa. BYK) |
| pyrogene Kieselsäure | hydrophobisierte, pyrogene Kieselsäure; Handelsname: TS720 (Fa. Cabot) |
| Füllstoff 1 | Aluminatzement; Handelsname: Ternal white (Fa. Imerys) |
| Füllstoff 2 | Portlandzement; Handelsname: Dyckerhoff weiß 42,5R (Fa. Dyckerhoff) |
| Füllstoff 3 | Quarzsand; Handelsname: Quarzsand F32 (Fa. Quarzwerke Frechen) |

**Tabelle 1:** Zusammensetzung der erfindungsgemäßen Harzkomponenten und der Vergleichs-Harzkomponenten ([Gew.-%])

| | Referenz 1 | Beispiel 1 | Referenz 2 | Beispiel 2 | Referenz 3 | Beispiel 3 | Referenz 4 | Beispiel 4 | Referenz 5 | Beispiel 5 | Referenz 6 | Beispiel 6 |
|---|---|---|---|---|---|---|---|---|---|---|---|---|
| UMA121 | 13 | 13 | | | | | | | | | | |
| mUMA | | | | | | | 13,9 | 13,9 | | | | |
| bisGMA | | | 12,8 | 12,8 | | | | | 13,76 | 13,76 | | |
| SR348L | | | | | 21,82 | 21,82 | | | | | 22 | 22 |
| PEG200DMA | 19,32 | 12,12 | 16 | 10,4 | 17,56 | 8,84 | 11,32 | 5,32 | 15,2 | 6 | 12,02 | 9,2 |
| TREGDMA | | | | | | | | 4 | | | | |
| DEGDMA | | 3,6 | | 1,6 | | 4,36 | | | | | | 0,94 |
| EGDMA | | 3,6 | | 4 | | 4,36 | | 2 | | 3,6 | | 0,94 |
| BDDMA | 7 | 7 | 10,52 | 10,52 | | | 7 | 7 | 3,44 | 9,04 | | 0,94 |
| HDDMA | | | | | | | 7,1 | 7,1 | 6,92 | 6,92 | 3,7 | 3,7 |
| TMPTMA | | | | | | | | | | | | |
| MEMO | | | | | | | | | | | 1,6 | 1,6 |
| DiPpT | 0,68 | 0,68 | 0,68 | 0,68 | 0,62 | 0,62 | 0,68 | 0,68 | 0,68 | 0,68 | 0,68 | 0,68 |
| tBBK | 0,1 | 0,1 | 0,08 | 0,08 | 0,07 | 0,07 | 0,1 | 0,1 | | | 0,07 | 0,07 |
| Tempol | | | | | | | | | 0,15 | 0,15 | | |
| BYK W9010 | | | | | | | | | | | 0,94 | 0,93 |
| TS720 | 3 | 3 | 3 | 3 | 3 | 3 | 3 | 3 | 3 | 3 | 3 | 3 |
| Ternal white | 20 | 20 | 20 | 20 | 20 | 20 | 20 | 20 | | | | |
| Dyckerhoff w | | | | | | | | | 20 | 20 | 20 | 20 |
| F32 | 36,9 | 36,9 | 36,92 | 36,92 | 36,93 | 36,93 | 36,9 | 36,9 | 36,85 | 36,85 | 36 | 36 |
| | | | | | | | | | | | | |
| Summe | 100 | 100 | 100 | 100 | 100 | 100 | 100 | 100 | 100 | 100 | 100,01 | 100,0 |

**Tabelle 2**: Berechnung der gewichtsmittleren Anzahl $n_{av}$ der Alkylenglykol-Einheiten nach der Formel: $n_{av} = \Sigma(n_i{*}w_i) / \Sigma(w_i)$

| | | | | | | | | | | | | |
|---|---|---|---|---|---|---|---|---|---|---|---|---|
| | **Referenz 1** | **Beispiel 1** | **Referenz 2** | **Beispiel 2** | **Referenz 3** | **Beispiel 3** | **Referenz 4** | **Beispiel 4** | **Referenz 5** | **Beispiel 5** | **Referenz 6** | **Beispiel 6** |
| PEG200DMA ($w_1{*}n_1$ ; **$n_1$=4**) | 77,28 | 48,48 | 64 | 41,6 | 70,24 | 35,36 | 45,28 | 21,28 | 60,8 | 24 | 48,08 | 36,8 |
| TREGDMA ($w_2{*}n_2$ ; $n_2$=3) | 0 | 0 | 0 | 0 | 0 | 0 | 0 | 12 | 0 | 0 | 0 | 0 |
| DEGDMA ($w_3{*}n_3$ ; $n_3$=2) | 0 | 7,2 | 0 | 3,2 | 0 | 8,72 | 0 | 0 | 0 | 0 | 0 | 1,88 |
| EGDMA ($w_4{*}n_4$ ; $n_4$=1) | 0 | 3,6 | 0 | 4 | 0 | 4,36 | 0 | 2 | 0 | 3,6 | 0 | 0,94 |
| Mittelwert $n_{av}$ | **4,00** | **3,07** | **4,00** | **3,05** | **4,00** | **2,76** | **4,00** | **3,12** | **4,00** | **2,88** | **4,00** | **3,58** |
| | | | | | | | | | | | | |
| PEG200DMA ($w_1{*}n_1$ ; **$n_1$=4,5**) | 86,94 | 54,54 | 72 | 46,8 | 79,02 | 39,78 | 50,94 | 23,94 | 68,4 | 27 | 54,09 | 41,4 |
| TREGDMA ($w_2{*}n_2$ ; $n_2$=3) | 0 | 0 | 0 | 0 | 0 | 0 | 0 | 12 | 0 | 0 | 0 | 0 |
| DEGDMA; ($w_3{*}n_3$ ; $n_3$=2) | 0 | 7.2 | 0 | 3,2 | 0 | 8,72 | 0 | 0 | 0 | 0 | 0 | 1,88 |
| EGDMA; ($w_4{*}n_4$ ; $n_4$=1) | 0 | 3,6 | 0 | 4 | 0 | 4,36 | 0 | 2 | 0 | 3,6 | 0 | 0,94 |
| Mittelwert $n_{av}$ | **4,50** | **3,38** | **4,50** | **3,38** | **4,50** | **3,01** | **4,50** | **3,35** | **4,50** | **3,19** | **4,50** | **3,99** |
| | | | | | | | | | | | | |
| $\Sigma(w_i) = (w_1+w_2+w_3+w_4)$ | | 19,3 | | 16,0 | | 17,6 | | 11,3 | | 9,6 | | 11,1 |
| ($w_1$) PEG200DMA | | 12,1 | | 10,4 | | 8,8 | | 5,3 | | 6,0 | | 9,2 |
| $\Sigma(w_{2\text{-}4})$ | | 7,2 | | 5,6 | | 8,7 | | 6,0 | | 3,6 | | 1,9 |
| Mittelwert $n_{av}$ ($n_1$=4) | | 3,07 | | 3,05 | | 2,76 | | 3,12 | | 2,88 | | 3,58 |
| Mittelwert $n_{av}$ ($n_1$=4,5) | | 3,38 | | 3,38 | | 3,01 | | 3,35 | | 3,19 | | 3,99 |

*Herstellung der Harzkomponenten*

Alle in Tabelle 1 enthaltenen *flüssigen* Bestandteile sowie Beschleuniger und Inhibitoren wurden in einen Kunststoffbecher gegeben und auf einem Magnetrührer bei 50°C bis zur Homogenität der Mischung geführt. Nach Zugabe der Kieselsäure sowie der Füllstoffe wurde von Hand mittels Holzspatel kurz vorgerührt und die Komponente im Dissolver (Fa. PC Laborsystem) 8 min bei 3500 Upm im Vakuum homogenisiert.

*Herstellung der Härterkomponente*

Die in den Beispielen verwendete Härterkomponente wurde hergestellt, indem 20 Gew.% Peroxan BP-40WS zunächst mit 20 Gew.% Wasser verdünnt wurden. In die wässrige Dispersion wurden 1,5 Gew.% Optigel CK (Fa. BYK) und die Hälfte von 58,5 Gew.% Quarzmehl Millisil W12 (Fa. Quarzwerke, Frechen) gegeben und von Hand kurz untergerührt. Im Dissolver (Fa. PC Laborsystem) wurde die Masse dann unter Rühren portionsweise mit der zweiten Hälfte des Quarzmehles und 12 min bei 3500 Upm im Vakuum homogenisiert.

Beide Komponenten wurden zur Durchführung der Setzversuche in Plasikkartuschen abgefüllt. Das Volumenverhältnis von Harzkomponente : Härterkomponente entsprach dabei jeweils dem von der Kartusche vorgegebenen Volumenverhältnis von 3 : 1.

*Bestimmung der Lastwerte*

Zur Bestimmung der Lastwerte der ausgehärteten Masse verwendete man eine hochfeste Ankergewindestange M 12, die in ein Bohrloch mit einem Durchmesser von 14 mm und einer Bohrlochtiefe von 72 mm in C20/25 Beton mit der jeweiligen chemischen Mörtelmasse bei ca. 20°C eingedübelt wurde. Man ermittelte die mittlere Versagenslast durch zentrisches Ausziehen der Ankergewindestange mit enger Abstützung. Es wurden jeweils fünf Ankergewindestangen eingedübelt und nach einer Aushärtezeit von 24 Stunden bei Raumtemperatur bzw. Temperieren auf 80°C wurden die Lastwerte bestimmt. Die hierbei ermittelten mittleren Lastwerte (Durchschnitt der fünf Messungen) sind in der (nachfolgenden) Tabelle 3 aufgeführt.

**Tabelle 3:** Auszugswerte bei +20°C und bei +80°C "in-service" in [N/mm$^2$]

| | +20°C | +80°C | Relative Verbundspannung Beispiel/Referenz bei 80°C [%] |
|---|---|---|---|
| Referenz 1 | 19,8 | 12,5 | |
| Beispiel 1 | 16,8 | 13,8 | 111 |
| Referenz 2 | 18,9 | 14,0 | |
| Beispiel 2 | 19,4 | 15,1 | 108 |
| Referenz 3 | 19,5 | 13,5 | |
| Beispiel 3 | 19,9 | 13,8 | 102 |
| Referenz 4 | 17,8 | 11,3 | |
| Beispiel 4 | 18,1 | 11,8 | 104 |
| Referenz 5 | 14,4 | 10,2 | |
| Beispiel 5 | 14,7 | 11,6 | 114 |
| Referenz 6 | 17,4 | 12,8 | |
| Beispiel 6 | 17,5 | 12,9 | 101 |

Die Ergebnisse in Tabelle 3 zeigen, dass durch die Verwendung der erfindungsgemäßen Reaktivverdünnermischungen in den Beispielformulierungen 1 bis 6, verglichen mit den Referenzformulierungen 1 bis 6, eine leichte bis deutliche Erhöhung der Auszugswerte bei +80°C zeigen.

## Patentansprüche

1. Reaktivharzmischung mit wenigstens einer radikalisch härtbaren Verbindung als Reaktivharz und mit einer Reaktivverdünnermischung,
**dadurch gekennzeichnet, dass**
die Reaktivverdünnermischung wenigstens einen ersten Reaktivverdünner (RV1), der unter Monoalkylenglykoldi(meth)acrylaten und Oligoalkylenglykoldi(meth)acrylaten mit zwei oder drei Alkylenglykol-Wiederholeinheiten ausgewählt ist, und wenigstens einen zweiten Reaktivverdünner (RV2), der unter Polyalkylenglykoldi(meth)acrylaten mit vier oder mehr als vier Alkylenglykol-Wiederholeinheiten ausgewählt ist,
wobei die gewichtsmittlere Zahl der Alkylenglykol-Wiederholeinheiten $n_{AV}$ der Mischung aus dem wenigstens einen ersten Reaktivverdünner (RV1) und dem wenigstens einen zweiten Reaktivverdünner (RV2) kleiner als 4 ($n_{AV} < 4$) ist und wobei die gewichtsmittlere Zahl der Alkylenglykol-Wiederholeinheiten $n_{AV}$ nach der Formel

$$n_{AV} = \Sigma(n_i * w_i) / \Sigma(w_i)$$

berechnet wird, in der

i die in der Reaktivverdünnermischung enthaltenen Reaktivverdünner (RVi) sind,
$n_i$ die jeweilige Anzahl der Wiederholeinheiten in dem Reaktivverdünner i, und
$w_i$ die Masse in Gew.-% des jeweiligen Reaktivverdünners i, bezogen auf die Reaktivverdünnermischung, ist.

2. Reaktivharzmischung gemäß Anspruch 1, **dadurch gekennzeichnet, dass** es sich bei dem wenigstens einen ersten Reaktivverdünner (RV1) um einen solchen der Formel (I) handelt

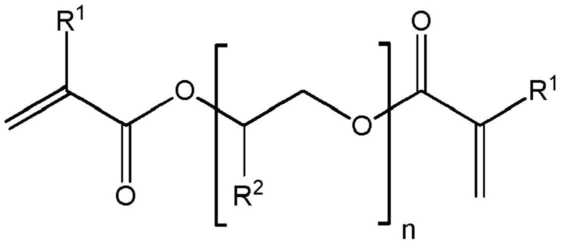

(I),

worin

die Reste $R^1$ jeweils unabhängig voneinander für H oder $CH_3$ stehen,
$R^2$ für H oder $C_1$-$C_7$-Alkyl steht und
n für durchschnittlich 1 bis 3 steht.

3. Reaktivharzmischung gemäß Anspruch 2, **dadurch gekennzeichnet, dass** der wenigstens eine erste Reaktivverdünner (RV1) aus der Gruppe bestehend aus Ethylenglykoldi(meth)acrylat, Propylenglykoldi(meth)acrylat, Diethylenglykoldi(meth)acrylat, Dipropylenglykoldi(meth)acrylat Triethylenglykoldi(meth)acrylat und Tripropylenglykoldi(meth)acrylat ausgewählt ist.

4. Reaktivharzmischung gemäß irgendeinem der vorhergehenden Ansprüche, **dadurch gekennzeichnet, dass** es sich bei dem wenigstens einen zweiten Reaktivverdünner (RV2) um einen solchen der Formel (II) handelt,

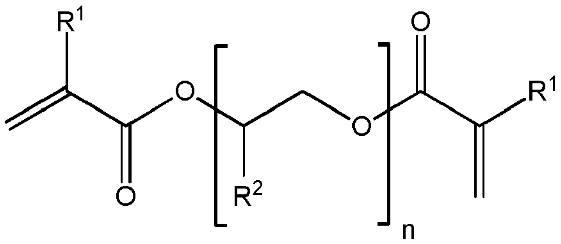

(II),

worin

die Reste $R^1$ jeweils unabhängig voneinander für H oder $CH_3$ stehen,
$R^2$ für H oder $C_1$-$C_7$-Alkyl steht und
n für durchschnittlich 4 oder größer, insbesondere 4 bis 7, steht.

**5.** Reaktivharzmischung gemäß irgendeinem der vorhergehenden Ansprüche, **dadurch gekennzeichnet, dass** die radikalisch härtbare Verbindung aus der Gruppe bestehend aus Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon ausgewählt ist.

**6.** Reaktivharzmischung gemäß irgendeinem der vorhergehenden Ansprüche, **dadurch gekennzeichnet, dass** die Reaktivharzmischung ferner einen oder mehrere weiteren Reaktivverdünner umfasst, mit der Maßgabe, dass der weitere oder die weiteren Reaktivverdünner nicht unter Alkylenglykoldi(meth)acrylaten ausgewählt sind.

**7.** Reaktivharzmischung gemäß irgendeinem der vorhergehenden Ansprüche, **dadurch gekennzeichnet, dass** die Reaktivharzmischung ferner einen Inhibitor, einen Beschleuniger und/oder weitere Additive umfasst.

**8.** Reaktivharz-System mit einer Reaktivharzkomponente, die eine Reaktivharzmischung gemäß irgendeinem vorhergehenden Ansprüche 1 bis 7 umfasst, und mit einer Härterkomponente, die ein Härtungsmittel für das Reaktivharz umfasst.

**9.** Reaktivharz-System gemäß Anspruch 8, **dadurch gekennzeichnet, dass** das Härtungsmittel ein Peroxid umfasst.

**10.** Reaktivharz-System gemäß Anspruch 8 oder 9, **dadurch gekennzeichnet, dass** die Reaktivharzkomponente und/oder die Härterkomponente ferner einen anorganischen Zuschlagstoff umfasst.

**11.** Reaktivharz-System gemäß irgendeinem der Ansprüche 8 bis 10, **dadurch gekennzeichnet, dass** das Reaktivharzsystem ein Zweikomponenten-System ist.

**12.** Verwendung einer Reaktivharzmischung gemäß irgendeinem der Ansprüche 1 bis 7 oder eines Reaktivharz-Systems gemäß irgendeinem der Ansprüche 8 bis 11 zur chemischen Befestigung von Verankerungsmitteln in Bohrlöchern oder zum baulichen Kleben.

**13.** Verwendung einer Mischung aus wenigstens einem ersten Reaktivverdünner (RV1) und wenigstens einem zweiten Reaktivverdünner (RV2) zur Verbesserung der Hochtemperatureigenschaften eines ausgehärteten mehrkomponentigen Reaktivharzsystems für die chemische Befestigung, wobei
der wenigstens eine erste Reaktivverdünner (RV1) unter Monoalkylenglykoldi(meth)acrylaten und Oligoalkylenglykoldi(meth)acrylaten mit zwei oder drei Alkylenglykol-Wiederholeinheiten ausgewählt ist und
der wenigstens eine zweite Reaktivverdünner (RV2) unter Polyalkylenglykoldi(meth)acrylaten mit vier oder mehr als vier Alkylenglykol-Wiederholeinheiten ausgewählt ist,
wobei die gewichtsmittlere Zahl der Alkylenglykol-Wiederholeinheiten $n_{AV}$ der Mischung aus dem wenigstens einen ersten Reaktivverdünner (RV1) und dem wenigstens einen zweiten Reaktivverdünner (RV2) kleiner als 4 ($n_{AV} < 4$) ist und wobei die gewichtsmittlere Zahl der Alkylenglykol-Wiederholeinheiten $n_{AV}$ nach der Formel

$$n_{AV} = \Sigma(n_i * w_i) / \Sigma(w_i)$$

berechnet wird, in der

i die in der Reaktivverdünnermischung enthaltenen Reaktivverdünner (RVi) sind,
$n_i$ die jeweilige Anzahl der Wiederholeinheiten in dem Reaktivverdünner i, und
$w_i$ die Masse in Gew.-% des jeweiligen Reaktivverdünners i, bezogen auf die Reaktivverdünnermischung, ist.

**14.** Verwendung gemäß Anspruch 13, **dadurch gekennzeichnet, dass** es sich bei dem ersten Reaktivverdünner um einen solchen der Formel (I) handelt,

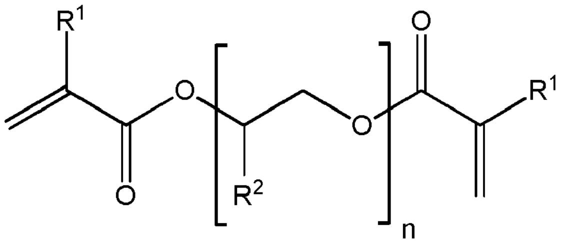

(I),

worin

die Reste $R^1$ jeweils unabhängig voneinander für H oder $CH_3$ stehen,
$R^2$ für H oder $C_1$-$C_7$-Alkyl steht und
n für durchschnittlich 1 bis 3 steht.

**15.** Verwendung gemäß Anspruch 14, **dadurch gekennzeichnet, dass** der wenigstens eine erste Reaktivverdünner (RV1) aus der Gruppe bestehend aus Ethylenglykoldi(meth)acrylat, Propylenglykoldi(meth)acrylat, Diethylenglykoldi(meth)acrylat, Dipropylenglykoldi(meth)acrylat Triethylenglykoldi(meth)acrylat und Tripropylenglykoldi(meth)acrylat ausgewählt ist.

**16.** Verwendung gemäß irgendeinem der Ansprüche 13 bis 15, **dadurch gekennzeichnet, dass** es sich bei dem wenigstens einen zweiten Reaktivverdünner um einen solchen der Formel (I) handelt

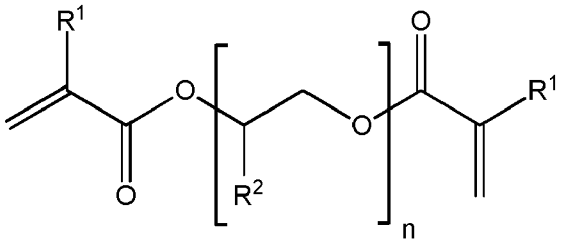

(II),

worin

die Reste $R^1$ jeweils unabhängig voneinander für H oder $CH_3$ stehen,
$R^2$ für H oder $C_1$-$C_7$-Alkyl steht und
n für durchschnittlich 4 oder größer, insbesondere 4 bis 7, steht.

Europäisches Patentamt
European Patent Office
Office européen des brevets

# EUROPÄISCHER RECHERCHENBERICHT

Nummer der Anmeldung
EP 21 16 2320

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 838 981 A1 (HILTI AG [LI]) 23. Juni 2021 (2021-06-23) * Ansprüche 1-14; Beispiele 31, 32; Tabelle 2 * ----- | 1-16 | INV. C08F283/06 C08F290/06 C09J151/08 C04B26/06 C04B40/06 |
| X | DE 199 40 312 A1 (BASF AG [DE]) 1. März 2001 (2001-03-01) * Absätze [0054], [0063]; Ansprüche 1-9; Beispiel 1 * ----- | 1-16 | |
| X | DE 10 2009 043792 A1 (HILTI AG [LI]) 31. März 2011 (2011-03-31) * Ansprüche 1-15; Beispiel 1; Tabellen 1, 2 * ----- | 1-16 | |
| | | | RECHERCHIERTE SACHGEBIETE (IPC) |
| | | | C08F C09J C04B |

Der vorliegende Recherchenbericht wurde für alle Patentansprüche erstellt

1

| Recherchenort | Abschlußdatum der Recherche | Prüfer |
|---|---|---|
| München | 4. August 2021 | Madalinski, Maciej |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 16 2320

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-08-2021

| Im Recherchenbericht angeführtes Patentdokument | Datum der Veröffentlichung | Mitglied(er) der Patentfamilie | Datum der Veröffentlichung |
|---|---|---|---|
| EP 3838981 A1 | 23-06-2021 | EP 3838981 A1 | 23-06-2021 |
| | | WO 2021122102 A1 | 24-06-2021 |
| DE 19940312 A1 | 01-03-2001 | DE 19940312 A1 | 01-03-2001 |
| | | EP 1218462 A1 | 03-07-2002 |
| | | US 6777458 B1 | 17-08-2004 |
| | | WO 0114483 A1 | 01-03-2001 |
| DE 102009043792 A1 | 31-03-2011 | AU 2010224317 A1 | 14-04-2011 |
| | | CN 102030498 A | 27-04-2011 |
| | | DE 102009043792 A1 | 31-03-2011 |
| | | EP 2314556 A2 | 27-04-2011 |
| | | JP 2011074388 A | 14-04-2011 |
| | | US 2011073327 A1 | 31-03-2011 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202010051818 B3
- EP 3164432 A1
- EP 1935860 A1
- DE 19531649 A1
- WO 10108939 A1
- US 3297745 A
- US 3772404 A
- US 4618658 A
- GB 2217722 A1
- DE 3744390 A1
- DE 4131457 A1
- US 2011071234 A
- DE 2312559 A1
- US PS3629187 A
- EP 44352 A1
- DE 19902685 A1
- EP 0684906 A1
- DE 4111828 A1
- DE 19961342 A1
- WO 2010108939 A1
- DE 102011077248 B1
- DE 19956509 A1
- US 20020091214 A1
- DE 3226602 A1
- EP 0432087 A1
- EP 1371671 A1
- US 2011071234 A1
- DE 102011078785 A1
- DE 102011078785
- DE 102004035542 A1
- EP 1329469 A1
- EP 1975190 A1
- EP 2017260 A
- EP 0387418 A2
- DE 102010008971 A1
- WO 02079341 A
- WO 02079293 A
- WO 2011128061 A1
- DE 102009059210
- DE 4231161 A1
- WO 2019007667 A